# EUROPÄISCHE PATENTANMELDUNG

(11) **EP 1 188 603 A1**
(43) Veröffentlichungstag der Anmeldung: **20.03.2002**
(21) Anmeldenummer: 01118647.5
(22) Anmeldetag: 03.08.2001
(51) Int. Cl.: B60N 2/08

(54) **Zusatzverriegelung für Fahrzeugsitz-Längseinstellvorrichtung**

(30) Priorität: 19.09.2000 DE 10046203
(71) Anmelder: Keiper GmbH & Co., 67657 Kaiserslautern (DE)
(72) Erfinder: Goy, Reinhard, 67657 Kaiserslautern (DE); Schäffling, Ulf, 67822 Gaugrehweiler (DE); Strubel, Peter, 55237 Flonheim (DE)
(74) Vertreter: Patentanwälte Hosenthien-Held und Dr. Held

(57) **Zusammenfassung**

- 1.: Zusatzverriegelung für eine Fahrzeugsitz-Längseinstellvorrichtung
- 2.: Bei einer Zusatzverriegelung (11) für eine Fahrzeugsitz-Längseinstellvorrichtung, insbesondere für eine Längseinstellvorrichtung eines Kraftfahrzeugsitzes, bei der eine Oberschiene (4) gleitend in einer Unterschiene (5) geführt und mit dieser verriegelbar ist, wobei die Zusatzverriegelung (11) im Normalfall unwirksam ist und erst im Crashfall die Oberschiene (4) zusätzlich mit der Unterschiene (5) verriegelt, ist ein Teil eines Sicherheitsgurtsystems an einem an der Oberschiene (4) festgelegten Gurtadapter (12) angebracht, wobei im Crashfall der angebrachte Teil des Sicherheitsgurtsystems wenigstens einen Teil (12''') des Gurtadapters (12) in definierter Weise relativ zur Oberschiene (4) und zur Unterschiene (5) bewegt und dadurch die Zusatzverriegelung (11) verriegelt.

## Beschreibung

Die Erfindung betrifft eine Zusatzverriegelung für eine Fahrzeugsitz-Längseinstellvorrichtung, insbesondere für eine Längseinstellvorrichtung eines Kraftfahrzeugsitzes, mit den Merkmalen des Oberbegriffs des Anspruches 1 und einen Fahrzeugsitz mit den Merkmalen des Oberbegriffs des Anspruches 10.

Die Längseinstellvorrichtungen von Fahrzeugsitzen müssen so dimensioniert sein, daß im Crashfall die Sitzschienenpaare nicht aufschälen und die Verriegelungen sich nicht öffnen. Andernfalls löst sich der Fahrzeugsitz im Crashfall von der Fahrzeugstruktur und wird beschleunigt. Bei manuell längseinstellbaren Fahrzeugsitzen kann außerdem der Fall auftreten, daß kurz vor einem Crash der Sitzbenutzer zufällig die Verriegelung gelöst hat, um den Fahrzeugsitz zu verstellen. Tritt dann der Crashfall ein, so wird der Fahrzeugsitz auch in diesem Fall beschleunigt. Aufgrund der hohen Relativgeschwindigkeit kann auch bei losgelassenem Verriegelungshebel die Verriegelung nicht mehr einfallen. Der Fahrzeugsitz fährt dann bis zum Endanschlag und wird dann schlagartig abgebremst, was Verletzungen beim Sitzbenutzer hervorrufen kann. In der DE 35 36 545 A1 wird daher vorgeschlagen, eine Zusatzverriegelung mit crashsensitivem Trägheitspendel als Auslöser vorzusehen. Diese Lösung ist noch etwas aufwendig in der Herstellung, da für eine hohe Sensitivität eine präzise Bearbeitung der Teile erforderlich ist.

Der Erfindung liegt die Aufgabe zu Grunde, eine Zusatzverriegelung der eingangs genannten Art zu verbessern. Diese Aufgabe wird erfindungsgemäß durch eine Zusatzverriegelung mit den Merkmalen des Anspruches 1 und durch einen Fahrzeugsitz mit den Merkmalen des Anspruches 10 gelöst. Vorteilhafte Ausgestaltungen sind Gegenstand der Unteransprüche.

Der Begriff "Verriegeln" soll im folgenden nicht nur auf einen Formschluß beschränkt sein, sondern sich gegebenenfalls auch auf einen Kraftschluß beziehen. Dadurch, daß ein Teil eines Sicherheitsgurtsystems an einem an der Oberschiene festgelegten Gurtadapter angebracht ist, wobei im Crashfall der angebrachte Teil des Sicherheitsgurtsystems wenigstens einen Teil des Gurtadapters in definierter Weise relativ zur Oberschiene und zur Unterschiene bewegt und die Zusatzverriegelung verriegelt, steht eine Zusatzverriegelung mit einem sehr empfindlichen Crashsensor zur Verfügung, die aufgrund Mitverwendung von bereits vorhandenen Bauteilen einfach und kostengünstig herzustellen ist. Die definierte Bewegung des Gurtadapters oder seines Teiles sorgt für ein sicheres Verriegeln der Zusatzverriegelung.

Vorzugsweise ist dem sich im Crashfall bewegenden Teil des Gurtadapters ein Riegelelement zugeordnet, welches durch die Bewegung im Crashfall in Anlage an die Unterschiene oder ein mit dieser fest verbundenes Teil kommt und damit unter Bildung eines Formschlußes und/oder Kraftschlußes zum Verriegeln zusammenwirkt. Das Riegelelement ist für eine sicherere Kraftübertragung vorzugsweise einstückig angeformt, kann aber auch gesondert ausgebildet und, sofern es nicht mit dem Gurtadapter fest verbunden ist, gesondert gelagert sein. Für eine einfachere Herstellung und eine bessere Nachrüstbarkeit ist das mit der Unterschiene fest verbundene Teil als gesondertes Teil ausgebildet. Vor Bildung eines Formschlußes und/oder Kraftschlußes zum Verriegeln kann noch eine Deformation von Teilen der Zusatzverriegelung erfolgen, welche zum Energieabbau dient oder einen Teil der definierten Bewegung bildet. Die definierte Bewegung des Teiles des Gurtadapter relativ zur Overschiene erfolgt in solchen bevorzugten Fällen mittels der Deformation des Gurtadapters. Die Verriegelung der Zusatzverriegelung schließt sich daran an.

In einer bevorzugten Ausführungsform weist der Gurtadapter eine Klammer auf, welche Oberschiene und Unterschiene umschließt und welche im Crashfall bewegt wird. Das vollständige oder nahezu vollständige Umschließen der Schienen durch die Klammer sorgt für eine bessere Verriegelung im Crashfall. Wenn die Klammer am Gurtadapter angeformt ist, kann der Gurtadapter als Stanzbiegeteil einfach hergestellt werden. Die Klammer wirkt im Crashfall vorzugsweise mit einem mit der Unterschiene fest verbundenen, deformierbaren Teil zusammen, so daß außer dem Energieabbau nach der Deformation noch ein passender Formschluß erfolgt, die Klammer sorgt selber für eine geeignet geformte Aufnahme an der Unterschiene. Vorzugsweise ist das deformierbare Teil als Rastbürste mit mehreren, abstehenden Rastfingern ausgebildet, welche sich entlang der Unterschiene über den gesamten möglichen Verfahrweg der Klammer hinweg erstreckt. Eine solche Rastbürste ist gut deformierbar. Eine abschnittsweise Deformationsmöglichkeit ist in jeder möglichen Sitzlängsposition vorhanden, was die Sicherheit erhöht.

Für die definierte Bewegung des Gurtadapters oder seines Teiles kommen beispielsweise ein definiertes Durchbiegen oder anderweitiges Deformieren des Gurtadapters oder ein definiertes Verdrehen oder Verschieben des Gurtadapters in Frage. Beim definierten Verdrehen ist beispielsweise der Gurtadapter drehbar gelagert und wird im Normalgebrauch durch ein entsprechend großes Reibmoment oder eine Federkraft kraftschlüssig oder durch einen Stift formschlüssig festgelegt. Im Crashfall dreht sich der Gurtadapter erst dann, wenn die Crashkräfte das Reibmoment oder die Federkraft überwinden oder den Stift abscheren. Feste Anschläge können die Bewegung des Gurtadapters oder seines Teiles begrenzen. Im Falle des definierten Verbiegens erfolgt ein zusätzlicher Energieabbau. Im Falle des definierten Verdrehens können vorteilhafte Kräfteverhältnisse durch eine Ausbildung des Gurtadapters als Drehhebel erreicht werden.

Ein erfindungsgemäßer Fahrzeugsitz kann bei seiner Längseinstellvorrichtung auf einer einzigen Sitzseite, vorzugsweise dann auf derjenigen mit dem Gurtschloß, oder auf jeder Sitzseite, d.h. zusätzlich auf der Seite mit der Beckengurtbefestigung, eine Zusatzverriegelung aufweisen. Mit der erfindungsgemäßen Zusatzverriegelung können auch fertige Fahrzeugsitze nachgerüstet werden.

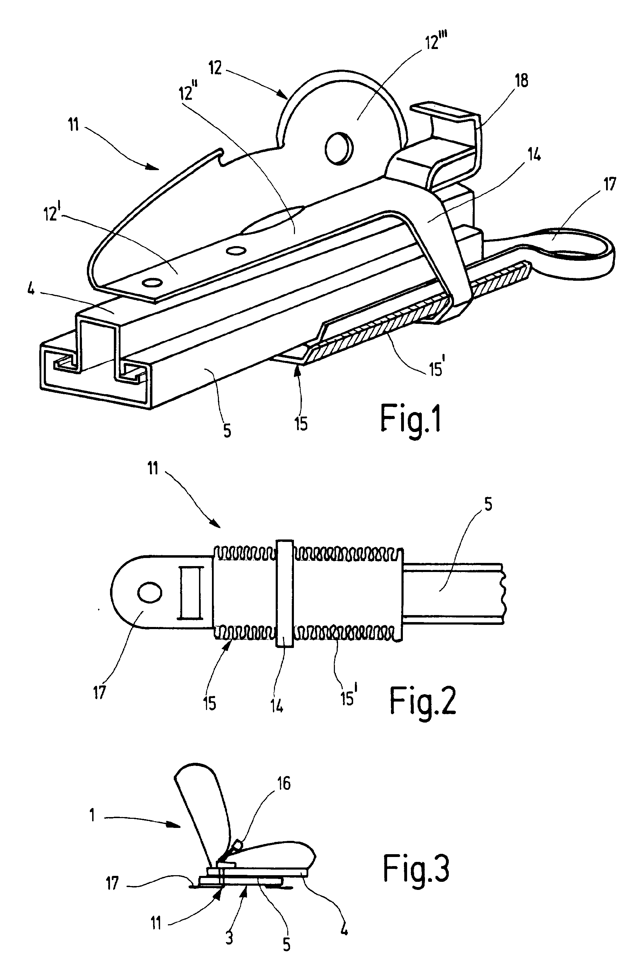

Im folgenden ist die Erfindung anhand von fünf in der Zeichnung dargestellten Ausführungsbeispielen näher erläutert. Es zeigen
- Fig. 1: eine perspektivische Teilansicht, mit Blick von schräg vorne, von Sitzschienen gemäß dem ersten Ausführungsbeispiel, welche auf der rechten Fahrzeugsitzseite vorgesehen sind,
- Fig. 2: eine Untersicht entsprechend Fig. 1,
- Fig. 3: eine schematische Seitenansicht eines Fahrzeugsitzes gemäß dem ersten Ausführungsbeispiel,
- Fig. 4: eine Seitenansicht entsprechend Fig. 1 mit Blick von hinten ohne den hinteren Fuß,
- Fig. 5: eine schematische Teilansicht des zweiten Ausführungsbeispiels,

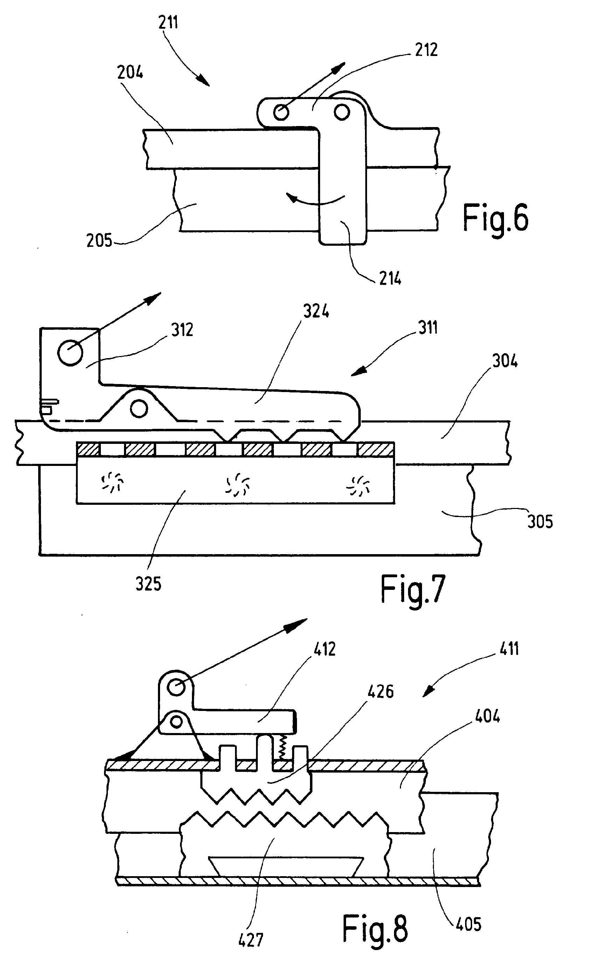

- Fig. 6: eine schematische Teilansicht des dritten Ausführungsbeispiels,
- Fig. 7: eine schematische Teilansicht des vierten Ausführungsbeispiels, und
- Fig. 8: eine schematische Teilansicht des fünften Ausführungsbeispiels.

Im ersten Ausführungsbeispiel weist ein Fahrzeugsitz 1 für ein Kraftfahrzeug eine vorzugsweise manuell betätigbare Längseinstellvorrichtung 3 mit je einer sitzstrukturfesten Oberschiene 4 und einer fahrzeugstrukturfesten Unterschiene 5 auf beiden Fahrzeugsitzseiten auf. Die gewöhnliche Ausrichtung des als Fahrersitz ausgebildeten Fahrzeugsitzes 1 definiert die nachfolgend verwendeten Richtungsangaben. Jede Oberschiene 4 ist als Gleitschiene in der zugehörigen Unterschiene 5 als Führungsschiene zur Einstellung der Sitzlängsposition in Sitzlängsrichtung beweglich geführt, wobei die beiden Schienen 4 und 5 einander in bekannter Weise hintergreifen. Zur Festlegung der eingestellten Sitzlängsposition weist die Längseinstellvorrichtung 3 eine in der Zeichnung nicht näher dargestellte Hauptverriegelung auf. Im folgenden ist der Einfachheit halber die ansonsten symmetrisch ausgebildete Längseinstellvorrichtung 3 nur im hinteren Bereich der rechten Fahrzeugsitzseite beschrieben.

Die Längseinstellvorrichtung 3 ist für den Crashfall mit einer Zusatzverriegelung 11 versehen, die einen am hinteren Ende der Oberschiene 4 angebrachten Gurtadapter 12 mit einer Klammer 14 und eine am hinteren Ende der Unterschiene 5 angebrachte Rastbürste 15 aufweist. Der als Stanz-Biege-Teil einstückig ausgebildete Gurtadapter 12 besteht in Längsrichtung der Schienen (x-Richtung) hintereinander aus einem winkelförmigen Befestigungsabschnitt 12', welcher an einem Schenkel mittels zwei Schrauben an der Oberschiene 4 befestigt ist, einem Biegeabschnitt 12", welcher in zwei voneinander getrennten Schenkeln den Befestigungsabschnitt 12' fortsetzt, und einem winkelförmigen Adapterabschnitt 12"', welcher sich an den Biegeabschnitt 12" anschließt und an welchem ein Gurtschloß 16 eines Sicherheitsgurtsystems angeschraubt ist.

Die als Streifen einstückig mit dem Gurtadapter 12 ausgebildete Klammer 14 steht vom Adapterabschnitt 12"' seitlich nach innen ab, ist um die Oberschiene 4 nach unten gebogen, um die Unterschiene 5 mit samt der Rastbürste 15 und einem der Befestigung am Fahrzeugboden dienenden, hinteren Fuß 17 unten herum gebogen, und wieder nach oben um die Oberschiene 4 zur Außenseite des Gurtadapters 12 gebogen. Das hintere Ende des Gurtadapters 12 ist mit einem gewissen Zwischenraum innerhalb einer an der Oberschiene 4 angebrachten Anschlagklammer 18 angeordnet.

Die Rastbürste 15 wird aus einem länglichen Blech herstellt, welches an seinen beiden schräg nach oben gebogenen Längsseiten mehrfach eingeschlitzt wird, so daß mehrere seitlich abstehende Rastfinger 15' als "Borsten" der Rastbürste 15 entstehen. Die Rastbürste 15 ist zusammen mit dem hinteren Fuß 17 an die Unterschiene 5 angeschraubt. Im Bereich der Rastbürste 15 ist die Unterschiene 5 so weit vom Fahrzeugboden beabstandet, daß während der normalen Längseinstellung des Fahrzeugsitzes 1 die Klammer 14 ungehindert zwischen der über ihren gesamten Verfahrweg hinweg vorhandenen Rastbürste 15 und dem Fahrzeugboden verfahren werden kann. Die Zusatzverriegelung 11 ist daher im Normalfall nicht wirksam.

Im Crashfall entsteht durch eine Relativbewegung zwischen Sitzbenutzer und Fahrzeugsitz 1 ein Zug im Sicherheitsgurt, welcher das Gurtschloß 16 relativ zur Oberschiene 4 nach oben zieht. Aufgrund des großen Biegemoments gibt der Gurtadapter 12 im Bereich des Biegeabschnitts 12" in vorgegebener, definierter Weise nach, d.h. der Gurtadapter 12 verbiegt sich in z-Richtung so, daß der Befestigungsabschnitt 12' in Anlage an der Oberschiene 4 bleibt, während der Adapterabschnitt 12"' sich nach oben bewegt. Dadurch wird die Klammer 14 mit nach oben gezogen, so daß sie entsprechend ihrer Breite in Kontakt mit einigen Rastfingern 15' kommt, welche in der eingestellten Sitzlängsposition innerhalb der Klammer 14 angeordnet sind. Aufgrund der großen Kräfte biegt die Klammer 14 diese Rastfinger 15' nach innen und kommt in Längsrichtung der Unterschiene 5 formschlüssig in Kontakt mit den benachbarten Rastfingern 15'.

Die Aufwärtsbewegung des Adapterabschnitts 12"' und der Klammer 14 wird durch die Anlage des Adapterabschnitts 12"' an die oberschienenfeste Anschlagklammer 18 bzw. durch die Anlage der Klammer 14 an den nach unten weisenden, ungeschlitzten Teil der Rastbürste 15 begrenzt. Je nach Stärke der Crashkräfte kann es noch zu einer Bewegung des Fahrzeugsitzes 1 in Längsrichtung kommen, bei welcher die Klammer 14 gegebenenfalls einige Rastfinger 15' abbricht. Durch das Verbiegen des Biegeabschnitts 12" und der Rastfinger 15' und durch deren Abbrechen wird so viel Energie abgebaut, daß hohe Beschleunigungsspitzen für den Sitzbenutzer vermieden werden.

In abgewandelter Ausführungsform der Zusatzverriegelung wird im Crashfall anstelle eines Formschlußes ein Kraftschluß erzeugt, beispielsweise zwischen der Klammer und einer entsprechend aufgerauhten Unterseite der Unterschiene.

Die Ausführungsbeispiele zwei bis fünf stimmen im wesentlichen mit dem ersten Ausführungsbeispiel überein, weshalb für gleiche oder gleichwirkende Bauteile jeweils um 100 höhere Bezugszeichen gewählt sind und im folgenden nur die Unterschiede beschrieben werden.

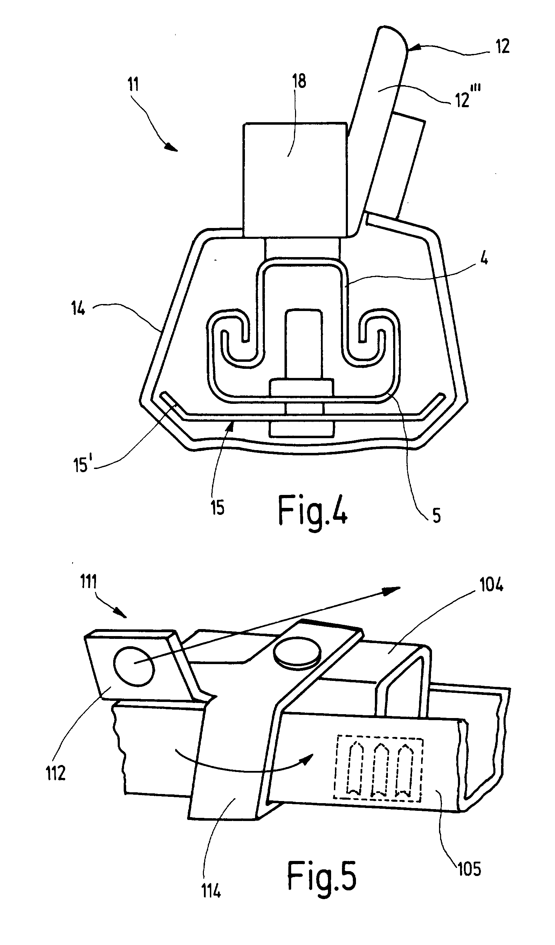

Die Zusatzverriegelung 111 gemäß dem zweiten Ausführungsbeispiel weist einen Gurtadapter 112 als Drehhebel auf, welcher auf der Oberseite der Oberschiene 104 so angebracht ist, daß er sich ab einem bestimmten Drehmoment um die z-Achse dreht. Im Crashfall wird dieses am kürzeren Hebelarm angreifende Drehmoment von der über das Gurtschloß eingeleiteten Kraft aufgebracht. Durch die definierte Drehung des Gurtadapters 112 kommt die Klammer 114 in Kontakt mit der Seitenwand der Unterschiene 105. Je nach Ausführung entsteht ein Kraftschluß oder, falls, wie in Fig. 5 gestrichelt angedeutet, eine Verzahnung an der Seitenwand der Unterschiene 105 vorhanden ist, ein Formschluß, welcher jeweils die beiden Schienen 104 und 105 zusätzlich verriegelt.

Im dritten Ausführungsbeispiel weist die Zusatzverriegelung 211 ebenfalls einen auf der Oberschiene 204 drehbar angebrachten Gurtadapter 212 als Drehhebel auf, der aber im Unterschied zum zweiten Ausführungsbeispiel um die y-Achse drehbar ist. Bei einem entsprechend großen Drehmoment am Gurtadapter 212 verdreht sich dieser auf definierte Weise so, daß die an beiden Enden auf der Drehachse gelagerte Klammer 214 in Kontakt mit der Unterseite der Unterschiene 205 kommt und kraftschlüssig oder formschlüssig verriegelt.

Das vierte Ausführungsbeispiel gleicht dem dritten Ausführungsbeispiel, jedoch weist bei dieser Zusatzverriegelung 311 der Gurtadapter 312 am längeren Hebelarm anstelle der Klammer einen angeformten Rastkamm 324 auf. Der Gurtadapter 312 ist als Drehhebel so an der Oberschiene 304 angebracht, daß der Rastkamm 324 seitlich von dieser um die y-Achse nach unten schwenken kann. Unterhalb des Rastkammes 324 ist an der Unterschiene 305 eine Verkrallungsleiste 325 mit mehreren Öffnungen angeschweißt. Wenn der Gurtadapter 312 im Crashfall aufgrund des vom Gurt ausgeübten,entsprechend großen Drehmoments sich in definiertes Weise verdreht, gelangt der Rastkamm 324 in Eingriff mit der Verkrallungsleiste 325, verriegelt also formschlüssig.

Das fünfte Ausführungsbeispiel ähnelt dem vierten Ausführungsbeispiel. Bei dieser Zusatzverriegelung 411 ist der Gurtadapter 412 ebenfalls als Drehhebel um die y-Achse drehbar an der Oberschiene 404 angebracht. Eine Zusatzkralle 426 ist im Inneren der Oberschiene 404 in z-Richtung verschiebbar geführt. Die Zusatzkralle 426 ist mit nach unten weisenden Zähnen versehen, welche auf eine Zahnstange 427 ausgerichtet sind, die in der Unterschiene 405 angebracht ist. Auf der nach oben weisenden Seite der Zusatzkralle 426 liegt, beispielsweise auf geeignet geformten Vorsprüngen, der längere Hebelarm des Gurtadapters 412 an. Wenn der Gurtadapter 412 im Crashfall eine definierte Verdrehung durchführt, drückt er auf die Zusatzkralle 426, welche wiederum in die Zahnstange 427 gedrückt wird, also einen Formschluß zum zusätzlichen Verriegeln der Schienen erzeugt.

### Bezugszeichenliste

- 1: Fahrzeugsitz
- 3: Längseinstellvorrichtung
- 4, 104, 204, 304, 404: Oberschiene
- 5, 105, 205, 305, 405: Unterschiene
- 11, 111, 211, 311, 411: Zusatzverriegelung
- 12, 112, 212, 312, 412: Gurtadapter
- 12': Befestigungsabschnitt
- 12": Biegeabschnitt
- 12"': Adapterabschnitt
- 14, 114, 214: Klammer
- 15: Rastbürste
- 15': Rastfinger
- 16: Gurtschloß
- 17: hinterer Fuß
- 18: Anschlagklammer
- 324: Rastkamm
- 325: Verkrallungsleiste
- 426: Zusatzkralle
- 427: Zahnstange

## Patentansprüche

1. Zusatzverriegelung für eine Fahrzeugsitz-Längseinstellvorrichtung, insbesondere für eine Längseinstellvorrichtung eines Kraftfahrzeugsitzes, bei der eine Oberschiene (4; 104; 204; 304; 404) gleitend in einer Unterschiene (5; 105; 205; 305; 405) geführt und mit dieser verriegelbar ist, wobei die Zusatzverriegelung (11; 111; 211; 311; 411) im Normalfall unwirksam ist und erst im Crashfall die Oberschiene (4; 104; 204; 304; 404) zusätzlich mit der Unterschiene (5; 105; 205; 305; 405) verriegelt, **dadurch gekennzeichnet, daß** ein Teil (16) eines Sicherheitsgurtsystems an einem an der Oberschiene (4; 104; 204; 304; 404) festgelegten Gurtadapter (12; 112; 212; 312; 412) angebracht ist, wobei im Crashfall der angebrachte Teil (16) des Sicherheitsgurtsystems wenigstens einen Teil (12''') des Gurtadapters (12; 112; 212; 312; 412) in definierter Weise relativ zur Oberschiene (4; 104; 204; 304; 404) und zur Unterschiene (5; 105; 205; 305; 405) bewegt und dadurch die Zusatzverriegelung (11; 111; 211; 311; 411) verriegelt.

2. Zusatzverriegelung nach Anspruch 1, **dadurch gekennzeichnet, daß** dem sich im Crashfall bewegenden Teil (12"') des Gurtadapters (12; 112; 212; 312; 412) ein Riegelelement (14; 114; 214; 324) zugeordnet ist, welches durch die Bewegung im Crashfall in Anlage an die Unterschiene (105; 205) oder ein mit dieser fest verbundenes Teil (15; 325; 427) kommt und unter Bildung eines Formschlußes und/oder Kraftschlußes zum Verriegeln zusammenwirkt.

3. Zusatzverriegelung nach Anspruch 2, **dadurch gekennzeichnet, daß** vor Bildung eines Formschlußes und/oder Kraftschlußes zum Verriegeln noch eine Deformation von Teilen (12", 15') der Zusatzverriegelung (11; 111; 211; 311; 411) erfolgt.

4. Zusatzverriegelung nach einem der Ansprüche 1 bis 3, **dadurch gekennzeichnet, daß** der Gurtadapter (12; 112; 212) eine Klammer (14; 114; 214) aufweist, welche Oberschiene (4; 104; 204) und Unterschiene (5; 105; 205) umschließt und welche im Crashfall bewegt wird.

5. Zusatzverriegelung nach Anspruch 3 und 4, **dadurch gekennzeichnet, daß** im Crashfall die Klammer (14) mit einem mit der Unterschiene (5) fest verbundenen, deformierbaren Teil (15) zusammenwirkt.

6. Zusatzverriegelung nach Anspruch 5, **dadurch gekennzeichnet, daß** das deformierbare Teil als Rastbürste (15) mit mehreren, abstehenden Rastfingern (15') ausgebildet ist, welche sich entlang der Unterschiene (5) über den gesamten möglichen Verfahrweg der Klammer (14) hinweg erstreckt.

7. Zusatzverriegelung nach einem der Ansprüche 1 bis 6, **dadurch gekennzeichnet, daß** der Gurtadapter (12) zwischen einem an der Oberschiene (4) angebrachten Teil (12') und dem sich im Crashfall bewegenden Teil (12"') einen Teil (12") mit geringerer Stabilität aufweist, welcher sich im Crashfall definiert verbiegt.

8. Zusatzverriegelung nach einem der Ansprüche 1 bis 6, **dadurch gekennzeichnet, daß** der Gurtadapter (112; 212; 312; 412) drehbar an der Oberschiene (104; 204; 304; 404) gelagert und kraftschlüssig und/oder formschlüssig festgelegt ist, wobei im Crashfall der Gurtadapter (112; 212; 312; 412) sich definiert relativ zur Oberschiene (104; 204; 304; 404) verdreht.

9. Zusatzverriegelung nach Anspruch 8, **dadurch gekennzeichnet, daß** der Gurtadapter (112; 212; 312; 412) als Drehhebel ausgebildet ist, wobei der Teil des Sicherheitsgurtsystems an einem kürzeren Hebelarm angreift.

10. Fahrzeugsitz (1), insbesondere Kraftfahrzeugsitz, mit einer Längseinstellvorrichtung (3), **dadurch gekennzeichnet, daß** die Längseinstellvorrichtung (3) eine im Crashfall wirksame Zusatzverriegelung (11; 111; 211; 311; 411) nach einem der Ansprüche 1 bis 9 aufweist.
